# EUROPEAN PATENT APPLICATION

(11) **EP 4 464 798 A1**
(43) Date of publication of application: **20.11.2024**
(21) Application number: 22920001.9
(22) Date of filing: 13.12.2022
(51) Int. Cl.: C21B 5/00

(54) **ULTRAHIGH OXYGEN-ENRICHED LOW-CARBON SMELTING METHOD**

(30) Priority: 12.01.2022 CN 202210029116
(71) Applicant: Xinjiang Bayi Iron & Steel Co., Ltd., Urumqi, Xinjiang 830022 (CN)
(72) Inventor: CHEN, Derong, Urumqi, Xinjiang 830022 (CN); TIAN, Baoshan, Urumqi, Xinjiang 830022 (CN); LIU, Lei, Urumqi, Xinjiang 830022 (CN); LIU, Yongxiang, Urumqi, Xinjiang 830022 (CN); LI, Tao, Urumqi, Xinjiang 830022 (CN)
(74) Representative: Pereira da Cruz, Joao
(86) International application number: PCT/CN2022/138696
(87) International publication number: WO 2023/134368

(57) **Abstract**

The present disclosure discloses a method for low-carbon smelting with oxygen ultra-highly enriched including steps of filling charges and smelting in blast furnace. Oxygen is enriched to be 15-20% at front of hot blast stove. A temperature of injected air is 900-1000°C. Remaining part of enriched oxygen is supplemented by injecting cold oxygen through tuyeres. Pulverized coal, high-reductive gas, and coke oven gas are injected through tuyeres to keep combustion temperature in theory at tuyeres between 2350-2500°C, during which an injection ratio of pulverized coal is reduced according to a gas displacement ratio of 0.3-0.35 kg/m³ for coke oven gas, or a coke ratio is reduced to be less than 210 kg/t according to a gas displacement ratio of 0.28-0.3 kg/m³ for decarbonized gas. The problem of "cold at the top and hot at the bottom" in the blast furnace where oxygen is enriched is solved and coke consumption is reduced.

## Description

### TECHNICAL FIELD

The present disclosure relates to a technical field of blast furnace ironmaking, particularly relates to a method for low-carbon smelting with oxygen ultra-highly enriched.

### BACKGROUND

70% of the energy consumed by steel enterprises is mainly in ironmaking process. Therefore, it is a primary way for reducing coal in the industry of steel to reduce carbon consumption in ironmaking process. Currently, the development of blast furnaces has technical difficulty in reducing carbon emissions. There is limitation in further reducing fuel consumption for molten iron. Scaling up and improving on productivity for blast furnace have reached their limits. At present, the fuel consumption for iron smelting in blast furnace is about 550 kg per ton of iron. With the double goals in carbon by the country, it is important for the traditional blast furnace to reduce carbon emissions.

The traditional ironmaking process in blast furnace roughly includes following steps: putting charges consisted of sinter, pellet, coke, and solvent in proportion into furnace from the top; blowing hot air, oxygen and pulverized coal into the furnace through tuyeres, humidifying the hot air, oxygen and pulverized coal blown into the furnace, generating gas by oxidation-reduction reaction when the charges contacts and move with the hot air in the furnace so that heat is transferred from the hot air to the charges, discharging gas off furnace through a rising pipe by moving gas upward, wherein materials in blast furnace melt and drop as molten iron and slag. The liquid slag and iron are discharged from tapholes of the blast furnace. In an oxygen highly enriched environment in blast furnace in the prior art, the temperature is cold at the top and hot at the bottom inside blast furnace, which renders smelting difficult to proceed. Meanwhile, about 35-40% of the iron elements in the furnace are direct reduced by carbon, so that coke consumption is high.

### BRIEF SUMMARY

The object of the present invention is to provide a method for low-carbon smelting with oxygen ultra-highly enriched to address the problems of the temperature cold at the top and hot at the bottom inside blast furnace, and reduce direct reduction and increase indirect reductions, so as to relief the problem of high coke consumption.

To achieve the above objects, the present disclosure provides a method for low-carbon smelting with oxygen ultra-highly enriched including steps of
S1. filling charges: filling charges with composition that 60-80% is ore charge, 20-40% is pellet, and 0-5% is raw ore and coke, in layers into the blast furnace.
S2. smelting in blast furnace: injecting cold oxygen into the blast furnace to obtain a smelting condition with oxygen ultra-highly enriched, when an amount of air blown into blast furnace per ton of iron is 500-600 m³/t and a temperature of injected air is 900-1000°C, with enriched oxygen of 15-20% blown at front of hot blast stove, with insufficient part compensated by injecting cold oxygen through tuyeres, injecting pulverized coal, high-reductive gas, and coke oven gas through tuyeres to keep combustion temperature in theory at tuyeres between 2350-2500°C, during which an injection ratio of pulverized coal is reduced according to a gas displacement ratio of 0.3-0.35 kg/m³ for coke oven gas, or a coke ratio is reduced to be less than 210 kg/t according to a gas displacement ratio of 0.28-0.3 kg/m³ for decarbonized gas.

The pure oxygen injected into the blast furnace has two parts, one is oxygen heated by the hot blast stove, accounting for 15-20% of total injected gas, with an inlet temperature of 900-1000°C and total air blown into furnace contains 40-50% oxygen, the other one is cold oxygen passing through the furnace. The high-reductive gas is blast furnace gas with CO₂ removed, composed of: 65-75% CO, 10-18% H₂, 6-15% N₂, 5-12% others. Since CO₂ constitutes a large part of the blast furnace gas, its removal significantly increases proportions of reductive gases like CO and H₂, which are injected at an amount per ton of iron of 200-300 m³/t, while coke oven gas is injected at an amount of 210-230 m³/t.

In comparison with the prior art, the present disclosure has following advantages:
In a case that an oxygen enriching ratio is 40-50% in blast furnace, smelting intensity of blast furnace is increased with productivity increased by 20%. The oxygen enriching ratio in the hot blast stove reaches 15-20%, which means this oxygen enters the furnace at a temperature of 900-1000°C, so that heat brought by the oxygen is increased and carbon consumption in the blast furnace is significantly reduced. The high-reductive gas and coke oven gas injected through tuyeres can participate in the reduction reactions inside the furnace, to increase calorific value of the gas, improve preheating and reduction reactions for charges at the top, and avoid problem of "cold at the top and hot at the bottom". While high-reductive gas is injected through tuyeres, combustion temperature in theory at tuyeres is adjusted in a situation with highly-enriched oxygen, so as to ensure a good furnace condition. Since main component of coke oven gas is hydrogen, which has a small molecular weight and good permeability, it is easier to react with iron oxides than CO, so that indirect reductions are increased and coke consumption is reduced. Part of the high-reductive gas and coke oven gas can be further used as heat source, to release heat upon combustion, so that coke consumption is reduced, i.e., the comprehensive consumption of coke may be reduced by 10-15%. A large amount of high-reductive gas and coke oven gas are injected through tuyeres, indirect reduction in the upper part of the blast furnace is performed sufficiently to significantly reduce carbon consumption for indirect reduction in the lower part of the blast furnace, so that carbon consumption is reduced and fuel ratio is reduced in the blast furnace. In a working condition with 50% oxygen enriched, the productivity of blast furnace is increased by 20%, and comprehensive consumption of carbon is reduced by 15%.

### DETAILED DESCRIPTION

The technical solutions in the embodiments of the present disclosure are described below clearly and completely. It is obvious that the embodiments described herein are only a part of the embodiments of the present disclosure, not all of them. Based on the embodiments of the present disclosure, all other embodiments obtained by those skilled in the art without creative efforts shall fall within the scope as claimed in the present disclosure.

The present disclosure provides a method for low-carbon smelting with oxygen ultra-highly enriched, including steps of:
S1. filling charges: filling charges with a composition of 60-80% ore charge, 20-40% pellet, and 0-5% raw ore into the blast furnace from the top of furnace, wherein the depth of charge line is 1.1-1.6m.
S2. smelting in blast furnace: increasing oxygen to be 15-20% at front of hot blast stove so that the total ratio of oxygen enriched is about 40-50%, when an amount of air blown into blast furnace per ton of iron is 500-600 m³/t and a temperature of injected air is 900-1000°C; injecting, when the oxygen is enriched enough in thew hot blast stove, cold oxygen through tuyeres for remaining part, with pulverized coal, high-reductive gas, and coke oven gas (0-250 m³/t) injected through tuyeres, increasing high-reductive gas (0-250 m³/t) injected into the furnace while increasing oxygen enriched at front of hot blast stove, to keep combustion temperature in theory at tuyeres between 2250-2350°C and amount of gas in the belly of furnace at 1200-1400 m³/t, during which an injection ratio of pulverized coal is reduced according to a gas displacement ratio of 0.3-0.55 kg/m³ for coke oven gas, or a coke ratio is reduced according to a gas displacement ratio of 0.25-0.5 kg/m³ for decarbonized gas.

The combustion temperature in theory through tuyeres is adjustable by injection of high-reductive gas, so that temperatures in the lower part of the furnace is not too high. coke oven gas is introduced to participate in reduction of iron, to reduce the consumption of coke for direct iron reduction. Since coke oven gas contains a large amount of CO, it may replace part of the coke in reacting with iron ore.

Oxygen enriching is preferably performed at front of hot blast stove, which means such oxygen is injected into the furnace at a temperature of 900-1000°C, to increase the heat brought in by the blast, which can effectively reduce carbon consumption in the blast furnace process. Enriching with cold oxygen is performed at tuyeres after the ratio of oxygen enriched reaches 20%,

### Embodiments

The operating parameters for a method of smelting in blast furnace in the prior art are as follows:

**Table 1**

| Operating Parameter | BV(m³/min) | BP(Kpa) | TP(Kpa) | BT(°C) | O₂(m³/h) |
|---|---|---|---|---|---|
| -- | 1000 | 180 | 100 | 980 | 3000 |

| Operating Parameter | Batch of Ore (t) | Batch of Coke (t) | | | |
|---|---|---|---|---|---|
| -- | 14.8 | 3.7 | | | |

The economic and technical indicators of the blast furnace with a smelting method in the prior art are as follows:

**Table 2**

| Output (t) | CR(kg/t) | PCR(kg/t) | SCR(kg/t) | FR(kg/t) | O/C |
|---|---|---|---|---|---|
| 1300 | 400 | 150 | 0 | 620 | 4 |

| sv(kg/t) | pig(t) | PT(°C) | Si(%) | S(%) | R₂ |
|---|---|---|---|---|---|
| 320 | 9.6 | 1430 | 0.6 | 0.035 | 1.1 |

The operating parameters for a method of smelting in blast furnace according to the present disclosure are as follows:

**Table 3**

| Operating Parameter | BV(m³/min) | BP(Kpa) | TP(Kpa) | BT(°C) | O₂(m³/h) |
|---|---|---|---|---|---|
| -- | 500-600 | 140-150 | 60 | 950 | 13000-15000 |

| Operating Parameter | Ore Batch (t) | Coke Batch (t) | | | |
|---|---|---|---|---|---|
| -- | 16.1 | 3.7 | | | |

The economic and technical indicators of the blast furnace with a smelting method according to the present disclosure are as follows:

**Table 4**

| Output (t) | CR(kg/t) | PCR(kg/t) | SCR(kg/t) | FR(kg/t) | O/C |
|---|---|---|---|---|---|
| 1350 | 300 | 160 | 40 | 540 | 4.41 |

| sv(kg/t) | pig(t) | PT(°C) | Si(%) | S(%) | R₂ |
|---|---|---|---|---|---|
| 320 | 9.8 | 1430 | 0.6 | 0.035 | 1.1 |

According to the comparison between the economic and technical indicators the blast furnace with smelting methods according to the prior art and the present disclosure, it can be seen that: with the method according to the present disclosure, high-reductive gas or coke oven gas is injected into the blast furnace through tuyeres, and immediately contacts the charges at the upper part of the blast furnace for a reduction reaction, so that the indirect reduction reaction inside the furnace is improved, the fuel consumption during smelting process in the blast furnace is significantly reduced. Moreover, by using oxygen-enriched for smelting in the blast furnace, the output of molten iron from the blast furnace is increased while the coke ratio and fuel ratio are significantly reduced. In other words, the output of molten iron is slightly higher than that of the ironmaking method for blast furnace in the prior art, although fuel consumption is reduced.

It should be noted that, in this document, the terms "include," "comprise," or any other variant thereof are intended to cover non-exclusive inclusion, so that a process, method, product, or device that includes a list of elements not only includes those elements but may also include other elements not explicitly listed, or may include elements inherent to such a process, method, product, or device. Without further limitations, the elements defined by the phrase "including a..." do not exclude the existence of additional identical elements in the process, method, product, or device that includes the elements.

The above description is only used to illustrate the technical solutions of the present disclosure without limitation thereon. Any modifications or equivalent replacements made by those skilled in the art to the technical solutions of the present disclosure should fall within the scope of the claims of the present disclosure.

## Claims

1. A method for low-carbon smelting with oxygen ultra-highly enriched, **characterized in that**, the method comprises steps of:
S1, filling charges: filling charges with composition of 60-80% ore charge, 20-40% pellet, and 0-5% raw ore and coke, in layers into the blast furnace;
S2, smelting in blast furnace: injecting pure oxygen into the blast furnace to obtain a smelting condition with oxygen ultra-highly enriched, when an amount of air blown into blast furnace per ton of iron is 500-600 m³/t and a temperature of injected air is 900-1000°C, wherein oxygen is enriched to be 15-20% at front of hot blast stove, with remaining part thereof supplemented by injecting cold oxygen through tuyeres, injecting pulverized coal, high-reductive gas, and coke oven gas through tuyeres to keep combustion temperature in theory at tuyeres between 2350-2500°C, during which an injection ratio of pulverized coalis is reduced according to a gas displacement ratio of 0.3-0.35 kg/m³ for coke oven gas, or a coke ratio is reduced to be less than 210 kg/t according to a gas displacement ratio of 0.28-0.3 kg/m³ for decarbonized gas.

2. The method for low-carbon smelting with oxygen ultra-highly enriched according to claim 1, **characterized in that**, a total air blown into furnace contains 40-50% oxygen enriched.

3. The method for low-carbon smelting with oxygen ultra-highly enriched according to claim 1, **characterized in that**, 15-20% enriched oxygen passes a hot blast stove as a heating system with a heating temperature of 900-1000°C.

4. The method for low-carbon smelting with oxygen ultra-highly enriched according to claim 1, **characterized in that**, high-reductive gases are injected at an amount per ton of iron of 200-300 m³/t.

5. The method for low-carbon smelting with oxygen ultra-highly enriched according to claim 1, **characterized in that**, coke oven gas is injected at an amount of 210-230 m³/t.

6. The method for low-carbon smelting with oxygen ultra-highly enriched according to claim 1, **characterized in that**, high-reductive gas is composed of: 65-75% CO, 10-18% H₂, 6-15% N₂, 5-12% others.
